Europäisches Patentamt

**European Patent Office**

Office européen des brevets

(19)

(11) Numéro de publication: **0 083 523
B1**

(12) **FASCICULE DE BREVET EUROPEEN**

(45) Date de publication du fascicule du brevet:
**19.03.86**

(51) Int. Cl.⁴: **C 08 G 14/08,** C 08 J 5/24

(21) Numéro de dépôt: **82402286.7**

(22) Date de dépôt: **14.12.82**

(54) **Résine phénol-formaldéhyde réactive, du type résol, contenant de l'urée combinée, son procédé de fabrication et son application dans le domaine des préimprégnés et des stratifiés.**

(30) Priorité: **29.12.81 FR 8124393**

(43) Date de publication de la demande:
**13.07.83 Bulletin 83/28**

(45) Mention de la délivrance du brevet:
**19.03.86 Bulletin 86/12**

(84) Etats contractants désignés:
**AT BE DE FR NL**

(56) Documents cités:
**FR - A - 2 228 803
GB - A - 986 193
GB - A - 987 757
GB - A - 1 505 032
US - A - 4 036 790**

**CHEMICAL ABSTRACTS, vol. 90, no. 8, février 1979,
page 32, no. 55722a, Columbus, Ohio, USA**

(73) Titulaire: **SOCIETE FRANCAISE HOECHST Société
anonyme dite:, 3, avenue du Général de Gaulle,
F-92800 Puteaux (FR)**

(72) Inventeur: **Perrier, André, 20-22 rue Marcel Le Pogamp
Bâtiment 4, F-93240 Stains (FR)**
Inventeur: **Turrini, Rémy, 22, rue Villa Louise,
F-95170 Deuil La Barre (FR)**

(74) Mandataire: **Rinuy, Santarelli et al, 14, avenue de la
Grande Armée, F-75017 Paris (FR)**

## Description

La presente invention concerne une resine phénolformaldéhyde réactive, du type résol, son procédé de fabrication et son application.

Les résines phénol-formaldéhyde, de type résol, sont largement utilisées comme résines d'agglomération dans de nombreuses applications. Elles permettent d'obtenir une bonne résistance au feu et, lors de la combustion, elles émettent peu de fumées exemptes de dérivés halogénés toxiques. Elles confàrent aux articles manufacturés une excellente tenue des caractéristiques mécaniques à chaud. Lors de leur mise en oeuvre, en catalyse basique, elles exigent habituellement des températures voisines de 150°C et de longues durées de pressage. Elles peuvent aussi, éventuellement, être utilisées en catalyse acide, mais même après neutralisation, elles demandent, lorsqu'on désire travailler à basses températures, des quantités importantes de catalyseurs acides, généralement de l'ordre de 10 à 20 % en poids de la résine et, dans ce cas, d'une part elles presentent une durée de vie en pot tres courte et, d'autre part, les articles manufacturés avec ces résines accusent très souvent des phénomènes de corrosion aux jonctions avec les piàces métalliques. De plus, ces résines supportent mal le vieillissement; ainsi, on constate très souvent la formation de produits colorés en surface. A fin, et surtout, elles contiennent du phénol et du formaldéhyde libres, lesquels sont des inconvénients rédhibitoires tant pour des raisons d'hygiene, de sécurité et de confort des postes de travail, que pour des raisons de finition, de peinture et de présentation des articles fabriqués avec ces résines. Pour tenter de remédier à certains de ces inconvénients, on a proposé des résines phénol-formaldéhyde contenant de l'urée combinée, présentant des taux de formaldéhyde libre inférieurs à 3 % ou compris entre 1 et 7 %, comme liants, soit pour des substrats fibreux qui en dehors d'une couleur relativement claire seraient facilement et uniformement dispersibles dans les fibres minérales (brevet français 2.228.803), soit pour du papier afin d'améliorer sa résistance au feu (brevet britannique 1.505.032); toutefois, les taux de formaldéhyde libre de ces resines sont encore trop élevés.

Pour ces raisons, les résines phénol-formaldéhyde n'ont pas connu de développement industriel dans le domaine des stratifiés renforcés-verre, communément désignés: "PRV''. pour ces matériaux, on apréféré faire appel à des resines polyesters, lesquelles autorisent l'obtention de PRV à haute résistance spécifique, à bonne isolation phonique, mais à très mauvaise résistance au feu. Cet inconvénient extremement génant pour certaines applications telles que la fabrication d'éléments de carrosserie pour automobile, n'a pu être que partiellement éliminé par adjonction d'agents igmifuges, généralement à forte teneur en halcgènes, et ceci à un coût très souvent disproportionné par rapport au prix de ces matériaux.

Or, la Demaderesse vient de découvrir après de longues recherches et avec étonnement, une résine phénol-formaldéhyde réactive, de type résol, contenant dans sa structure de l'urée combinée, à faibles taux de phénol et de formaldehyde libres, susceptible d'être mise en oeuvre en catalyse acide, à des températures moyennes non supérieures à 120°C et pouvant être utilisée soit selon les procédés connus, en catalyse acide, à la fabrication de PRV, soit selon un procédé d'application caractérisé par l'emploi de faibles taux de catalyseurs acides et par des températures de cuisson généralement comprises entre 80 et 100°C, à la réalisation de préimprégnés, possédant d'excellentes propriétés mécaniques, présentant des phénomènes decorrosion très fortement limités, d'excellentes caractéristiques antifeu et permettant une finition soignée.

La présente invention a donc pour objet une résine réactive: phénol-formaldéhyde-urée, son procédé de préparation et sonapplicatlon soit-dans la fabricatlon de PRV, soit dans la réalisation de préimprégnés.

Cette résine est caractérisée par les points suivants pris en combinaison:
- le rapport molaire formaldéhyde sur phénol est compris entre 2 et 2,5, avantageusement il est de 2,16;
- elle contient de l'urée combinée et le rapport molaire urée sur phénol est compris entre 0,15 et 0,25, avantageusement il est de 0,19;
- la teneur en phénol libre, déterminée par entraînement à la vapeur d'eau est inférieure ou égale à 4 % en poids;
- la teneur en formaldéhyde libre, déterminée selon la méthode au chlorhydrate d'hydroxylamine est inférieure ou égale à 1 % en poids;
- le taux de matières sèches, déterminé par séchage d'un échantillon de 1 g à 105°C durant 6 heures est compris entre 70 et 90 % en poids;
- elle présente un pH de 6,7-7,0 et une viscosité, déterminée à 20°C, avec un tube viscosimétrique du type Oswald, comprise entre 0,2 et 5 Pa.A
- elle peut être éventuellement diluée à l'eau et/ou avec un ou plusieurs solvants organiques miscibles à l'eau.

La teneur en phénol libre de la résine est déterminée de la manière suivante:

On pèse exactement 2 à 3 g de résine dans une petite capsule de verre, on introduit ensuite l'ensemble dans le ballon d'entrainement d'un appareil à entrainement à la vapeur d'eau contenant 50 g d'eau et 50 cm$^3$ d'acide acétique à 20 % en poids, puis on entraine à la vapeur d'eau jusqu'à obtenir 500 cm$^3$ de distillat que l'on recueille dans une fiole jaugée de 500 cm$^3$. On traite 50 cm$^3$ de ce distillat homogénéisé, pendant 30 minutes à l'obscurité, en flacon bouché, avec 50 cm$^3$ de solution 0,1 N de bromure-bromate de sodium et 10 cm$^3$ d'acide chlorhydrique concentré de manière à transformer le phénol entrainé en tribromophénol.

L'excès de brome non transformé est enfin titré par iodométrie classique avec une solution 0,1 N d'hyposulfite de sodium en présence d'iodure de potassium.

Parallélément, on effectue un essai témoin sur 50 cm$^3$ de solution 0,1 N de bromure-bromate de sodium. La teneur en phénol libre sur la résine telle quelle, exprimée en gramme pour 100 g de résine est donnée par

2

l'expression Tp = 1,567 nT/p où p représente le poids en grammes de la prise d'essai, T le titre de la solution d'hyposulfite de sodium et n la différence en cm³ des quantites de solution d'hyposulfite de sodium utilisées entre l'essai témoin et l'essai lui-même.

La teneur en formaldéhyde libre de la résine est déterminée de la manière suivante:

On pèse exactement environ 3 g de résine dans un erlenmeyer de 250 cm³, puis on dissout cette prise d'esai dans 100 cm³ d'éthanol dilué par de l'eau distillée, à 70 % en poids. On ajuste ensuite le pH de cette solution à 3,5 avec de l'acide chlorhydrique 0,5 N et on la traite pendant 15 minutes sous agitation avec 10 cm³ d'une solution aqueuse à 10 % de chlorhydrate d'hydroxylamine préalablement acidifiée à pH = 3,5. Enfin, on titre en retour par de la soude 0,5 N jusqu'à pH = 3,5.

La teneur en formaldéhyde libre de la résine telle quelle, exprimée en gramme pour 100 g est donnée par l'expression Tf = 1,5 n/p où n représente le nombre de cm³ de soude 0,5 N utilisé et p le poids en grammes de la prised'essai.

La présente invention a aussi pour objet un procédé de préparation de cette résine réactive. Selon l'invention, cette résine est obtenue par condensation, à chaud, en milieu aqueux alcalin, en présence d'un catalyseur alcalin, de formaldéhyde avec du phénol dans les proportions molaires précédemment indiquées, suivie lorsque la condensation est parvenue à un certain stade de condensation déterminée par une valeur de la viscosité dynamique du milieu réactionnel, d'une réaction à chaud avec l'urée puis d'une neutralisation à pH = 6,7-7,0 avec un acide minéral fort et enfin d'une concentration sous vide à faibles températures jusqu'à obtention de la concentration désirée.

Si nécessaire, cette résine peut être ensuite diluée à l'eau et/ou avec le solvant choisi.

Ce procédé est caractérisé par les points suivants pris en combinaison:
- il est mis en oeuvre en milieu aqueux alcalin, en présence d'un catalyseur basique du type hydroxyde de métal alcalin; avantageusement ce catalyseur est de l'hydroxyde de sodium;
- la condensation est effectuée à chaud, à une température inférieure ou égale à 100°C, avantageusement comprise entre 60 et 85°C,
- le rapport molaire hydroxyde de métal alcalin sur phénol engage est compris entre 0,01 et 0,1, avantageusement il est de 0,055;
- lorsque la condensation du formaldéhyde avec le phénol engagé est parvenue à un certain stade de condensation caractérisé par un temps d'écoulement de 40-45 secondes de 80 g de résine dans un tube viscosimétrique du type Oswald de coefficient K' = 0,006 environ, l'urée est introduite et la condensation est poursuivie à une température non supérieure à 100°C, avantageusement comprise entre 40 et 80°C jusqu'à obtention d'un taux de formaldéhyde libre inférieur ou égal à 1 %, ensuite le milieu réactionnel est neutralisé à pH 6,7-7,0 avec un acide minéral fort tel que l'acide chlorhydrique;
- après neutralisation, le milieu réactionnel est concentré sous vide, à une température non supérieure à 80°C jusqu'à obtention de la concentration désirée déterminée par un taux de matières sèches compris entre 70 et 90 % en poids;

La détermination de la réactivité de la résine est effectuée de la manière suivante:

Dans un gobelet en polyéthylène cylindroconique de diamètres à la base 35 mm et au sommet 65 mm, d'épaisseur 1 mm et de hauteur 75 mm, place dans un cube de mousse phénolique de 200 mm de côté et de densité 0,04, on place 100 g de résine à tester, puis à 20°C on introduit 12 cm³ d'une solution contenant 63 % d'acide hydroxy-4 benzènesulfonique, 27 % d'eau et 10 % de méthanol. On agite vigoureusement pendant 1 minute, puis on recouvre le gobelet avec un couvercle en élastomère d'épaisseur 3 mm dans lequel est ménagé un trou central de manière à introduire un tube à essai de diamètre intérieur 8,2 mm contenant 1,5 cm³ d'éthylèneglycol,. On note la température de l'éthylèneglycol contenu dans le tube à essai plongeant dans la résine 90 secondes après l'introduction du durcisseur et ensuite, on construit la courbe de la température du milieu réactionnel en fonction du temps. La réaction exothermique qui se développe au sein de la résine conduit à une température donnée en un temps donné. La reactivité de la résine est exprimée en degrés Celsius. Cette valeur correspond au palier de la courbe précédente.

La résine selon l'invention convient particulièrement bien à la réalisation de stratifiés renforcésverre. Elle permet d'obtenir des articles de belle présentation, autorisant une finition éventuelle par peinture ou tout autre moyen, présentant une très bonne résistance au feu avec, en cas de combustion, une faible émission de fumées libres de dérivés toxiques halogénés; elle apporte une excellente tenue des caractéristiques mécaniques à chaud. La résine selon l'invention, peut être mise en oeuvre avec des catalyseurs acides, à des températures de cuisson variant de 20 à 95°C et pendant une durée brève, autorisant ainsi des sadences de production élevées, sans dégagement important et/ou nuisible de phénol et/ou de formaldéhyde.

Elle peut être utilisée soit dans des procédés réalisés en presse à chaud, soit dans des procédés par injection et contact soit enfin dans d'autres procédés connus.

De plus, la résine selon l'invention convient particulièrement bien à la préparation de préimprégnés par catalyse acide. Lors de cette application, la résine selon l'invention se caractérisé par les points suivants pris isolément ou en combinaison:
- elle nécessite un faible taux en catalyseurs acides généralement compris entre 0,5 et 5 % en poids de la résine; avantageusement on utilise de 1,5 à 2 % en poids de la résine, d'un catalyseur acide choisi habituellement parmi les acides organiques sulfoniques tels que l'acide hydroxy-4 benzènesulfonique;
- elle permet de travailler à des températures de cuisson comprises entre 80 et 95°C;
- elle présente une très bonne réactivité;

- elle conduit à une excellente stabilité du préimprégné toujours supérieure à 2 mois.

Ainsi, les produits manufactures avec la resine selon l'invention par la méthode d'impregnation similaire à celle utilisée en industrie papetière, souvent désignée par le vocable "TEGOFILM" possèdent un beau fini, sans coloration parasite due à la présence de phénol libre, autorisent une bonne adhérence des films de peinture sans nécessiter généralement de couches d'accrochage et présentent enfin des phénomènes de corrosion considérablement réduits par rapportaux PRV de l'art antérieur obtenus par catalyse acide. En outre, la résine selon l'invention possède une durée de vie en pot considérablement allongée, quel que soit le taux de catalyseur employé.

Des charges végétales et/ou minérales non carbonatées telles que talcs, kaolins, farines végétales amylacées peuvent être introduites dans la résine selon l'invention dans des proportions de 3 à 40 %.

Les exemples suivants sont donnés à titre illustratif et nullement limitatif de l'invention.

## EXEMPLE 1

### Préparation de la résine A

On mélange 250 kg (13,9 kmoles) d'eau permutée et 2070 kg (19,8 kmoles) de phénol à 90 % en poids (hydrate de phénol), puis à 30°C, on introduit sous agitation en 20 minutes environ 95 kg (1,12 kmole) de soude à 47 % en poids, soit environ 63 litres. Au cours de l'introduction de la soude, la température du milieu réactionnel s'élève progressivement à 35-40°C. En fin d'introduction, on élève la température du milieu à 60 ± 2°C, puis en maintenant cette température on ajoute sous agitation 2565 kg (42,75 kmoles) de formaldéhyde à 50 % en poids chauffé au préalable à 50 ± 5°C. On laisse se développer la réaction exothermique jusqu'à 78-90°C avec, si nécessaire, soit un léger chauffage extérieur pour amorcer cette réaction exothermique, soit un refroidissement extérieur pour la contrôler. L'évolution de la condensation est suivie en mesurant la viscosité du milieu réactionnel, avec un tube viscosimétrique du type Oswald de coefficient K' = 0,00596. Lorsque le temps d'écoulement à 20°C, de 80 g de résine est de 44 ± 2 secondes, on stoppe la condensation en refroidissant le milieu réactionnel à 55°C, (la durée de cette condensation est généralement comprise entre 60 et 80 minutes) puis on introduit 225 kg d'urée (3,745 kmoles). Le milieu réactionnel est ensuite abandonne sous agitation 1 heure à 55°C. A ce stade, le taux de formaldéhyde libre dans le milieu réactionnel est inférieur à 1 %. On le refroidit à 35 ± 2°C et à cette temperature, on le neutralise à pH = 6,7 - 7,0 avec de l'acide chlorhydrique concentré d = 1,18, dilué à 50 % en poids avec de l'eau. On consemme généralement 105 ± 2 kg d'acide chlorhydrique concentré soit (1,04 kmole). Le milieu réactionnel est ensuite concentré sous vide à 42 ± 2°C jusqu'à obtention de 1580 litres de distillat. On obtient ainsi une résine présentant un pH compris entre 6,7 et 7,0, une densité à 20°C de 1,268 ± 0,002; une viscosité à 20°C de 10 à 15 poises déterminée au tube viscosimétrique, un taux de matières sèches déterminé sur 1 g séché 6 heures à 105°C de 77 ± 1 %, un taux de formaldehyde libre mesuré, selon la méthode au chlorhydrate d'hydroxylamine inférieur à 1 %, un taux de phénol libre déterminé par entrainement à la vapeur d'eau inférieur ou égal à 4 %, et une réactivité laboratoire de 110-115°C..

Cette résine présente les rapports molaires suivants:
- formaldehyde sur phénol 2,16
- hydroxyde de sodium sur phénol 0,055
- urée sur phénol 0,19

Pour les applications, la résine réactive selon l'invention peut être diluée avec des solvants tels que l'eau, le méthanol, l'éthylèneglycol, etc. dans des proportions pondérales pouvant varier de 0 à 20 %. pour les applications illustrées dans les exemple suivants, on a préparé les résines B et C par dilution de la résine A selon les proportions suivantes:

Résine B 95% de résine A 5 % de méthanol

Résine C 90,3 % de résine A 9,7 % d'éthylèneglycol

Les caractéristiques de ces résines sont données dans le tableau I.

**0 083 523**

**TABLEAU I**

|  | Résine A | Résine B | Résine C |
|---|---|---|---|
| Réactivité | 110–115°C | 90–110°C | 80–100°C |
| Densité à 20°C | 1,268 | 1,232 ± 2 | 1,242 ± 2 |
| Matières sèches | 77 ± 1 % | 73 ± 1 % | 73 ± 1 % |
| Viscosité déterminée à 20°C exprimée en m Pa. s | 1–1,5 | 0,3–0,5 | 0,3–0,5 |
| pH | 6,7–7,0 | 6,7–7,0 | 6,7–7,0 |
| Stabilité à 20°C exprimée en mois | supérieure à 2 mois | | |

## EXEMPLE 2

### Caractéristiques de plastiques renforcés-verre réalisés avec la résine B

2-1- Pièce effectuée par le procédé à la presse à chaud. Selon ce procédé, on dépose le mat de fibres de verre dans le moule chaud, puis on verse la quantité adéquate de mélange résine-catalyseur préparé extemporanément et ensuite on ferme le moule et on chauffe à 80°C sous une pression de 2 bars pendant quelques minutes. Conditions opératoires:
- résine utilisée: résine B
- i-mprégnation et cuisson: 15 min à 80°C
- Post-cuisson: 2 à 14 h à 80°C
- Taux de catalyseur: 8 % en poids d'une solution constituée de 90 % d'une solution aqueuse à 70 % d'acide hydroxy-4 benzènesulfonique et de 10 % de méthanol.
- Mat de fibres de verre à enzymage et liant du type époxy
- Taux de verre: 46 %
- Densité du PRV obtenu: 1,5
- Epaisseur du PRV fini: 4 mm

### Caractéristiques obtenues:

Tenue au feu
Classement selon la norme AFNOR P 92 501: M1
Indice limite d'oxygène selon la norme AFNOR NF T 51071: 50
Emission de fumée selon la norme AFNOR X 10702:
DS* 1 min 0
DS 2 min 3
DS 3 min 10
DS 4 min 19
t (0,9 Dm)** 9,8 min
t D1*** 3,7 min
* designe la densité optique spécifique
** désigne le temps mis pour obtenir 90 % de la densité optique spécifique
*** désigne le temps pour atteindre une densité optique spécifique égale à 16.
Toxicité de fumées: absence totale de dérivés halogénés Caractéristiques mecaniques:
Flexion à sec selon norme AFNOR T 56-102

5

Contrainte à la rupture: 185 N/mm²

Module d'élasticité: 7000 N/mm²

Flexion après cycle V100 (c'est-à-dire la valeur après traitement pendant 2 heures dans de l'eau à 100°C) selon la norme DIN 68 761

Contrainte à la rupture: 170 N/mm²

Module d'élasticité: 6700 N/mm²

Température de fléchissement selon la norme AFNOR T 1 51.005: 250°C

Résistance au choc selon la norme AFNOR T 51-035: 95 kg/m² Durée Barcoll selon la norme AFNOR p 38-501: 30 Absorption d'eau: cycle V2O(c'est-à-dire la valeur après immersion pendant 24 heures dans de l'eau à 20°C) selon la norme DIN 68-761: 1,2 %

2-2- pièce effectuée par le procédé au contact:

Selon ce procédé, on verse dans un moule préalablement ciré, la quantite adéquate du mélange résinecatalyseur préparé extemporanément, on place ensuite le mat de fibres de verre, on le tapote de manière à l'imprégner totalement, et, après élimination des bulles, si nécessaire, on répète l'opération jusqu'à obtention de l'épaisseur désirée. Le moule est ensuite abandonne à la température ambiante jusqu'à blanchiment de la résine et on termine par une post-cuisson de 2 à 14 heures à 80°C.

conditions opératoires:

Résine utilisée: resine B

Post-cuisson: 2 à 14 heures à 80°C

Taux de catalyseur: 8 % en poids d'une solution

constituée de 90 % d'une solution aqueuse à 70 % d'acide hydroxy-4 benzènesulfonique et de 10 % de méthanol.

Mat de fibres de verre à enzymage et liant du type époxy Taux de verre: 35 % environ

Densité du PRV obtenu: 1,4

Epaisseur du pRV fini: 4 mm

Caractéristiques mécaniques:

Flexion à sec selon la norme AFNOR T 56-102

Contrainte à la rupture: 143 N/mm²

Module d'élasticité: 4920 N/mm²

Résistance au choc selon la norme AFNOR T 51-035: 64 kg/m² Dureté Barcoll selon la norme AFNOR P 38-501: 21 Absorption d'eau: cycle V20 selon la norme DIN 68-761:

1,0 %

Flexion après cycle V100  selon la norme DIN 68-761

Contrainte à la rupture: 133 N/mm²

Module d'élasticité: 4320 N/mm²


## EXEMPLE 3

### Application de la résine selon l'invention à laréalisation de gréimprégnés phénoliques.

3-1- préparation des préimpregnés

On imprègne soit par contact soit par trempagesoit enfin par d'autres techniques classiques industrielles des mats de fibres de verre découpés aux dimensions desirées avec un mélange résine-catalyseur-démoulant interne préparé extemporanément, puis on les sèche en étuve ventilée à 80-105°C jusqu'à léger blanchiment à chaud, conduisant ainsi à un blanchiment total à froid. Ainsi, on obtient des préimprégnés non collants, plastiques a légèrement rigides pouvant être utilises à la température ambiante après un délai de 5 à 15 jours. 3-2- Conditions opératoires

Résine utilisée: resine C

Mat de fibres de verre à enzymage et liant du type époxy à 450 g par m²

Rapport mat sur résine: 40/60 en poids.

Dimensions des plaques: 400 mm par 300 mm.

Epaisseur: 4,5 environ

Nombre de couches de mat: 6

Taux de catalyseur: 2 % à 3 % en poids d'une solution constituée de 90 % d'une solution aqueuse à 70 % d'acide hydroxy-4 benzènesulfonique et de 10 % de méthanol.

Taux de démoulant interne: 1 % en pids d'un polymère siliconé tel que ACMOS NL® commercialisé par la Société MIPLACOL SA.

Cuisson: 30 min à 105°C

post-cuisson: cf. tableau

6

**0 083 523**

| Caractéristiques mécaniques : | Non post-cuit | Post-cuit 2 h à 80°C |
|---|---|---|
| Flexion à sec selon norme AFNOR T 56-102 | | |
| Contrainte à la rupture en N/mm$^2$ | 173 | 179 |
| Module d'élasticité en N/mm$^2$ | 7220 | 7410 |
| Flexion après cycle V100 selon norme DIN 68-761 | 169 | 185 |
| Module d'élasticité en N/mm$^2$ | 6950 | 6950 |
| Flexion résiduelle | | |
| Contrainte à la rupture | 98 % | 103 % |
| Module d'élasticité | 96 % | 94 % |
| Résistance au choc selon norme AFNOR T 51-035 | 97 | 109 |
| Absorption d'eau après cycle V20 selon norme DIN 68-761 | 0,6 % | 0,8 % |
| Densité | 1,558 | 1,481 |
| Epaisseur | 4,6 | 4,5 |

Il va de soi que la présente invention n'a été décrite qu'à titre purement explicatif et nullement limitatif et que toute modification utile pourra y être apportée sans sortir de son cadre tel que défini par les revendications ci-après.

**Revendications**

1. Résine phénol-formaldéhyde réactive de type résol qui contient dans sa structure de l'urée combinée, dont le rapport molaire forma ldéhyde sur phénol est compris entre 2 et 2,5, dont le rapport urée sur phenol est compris entre 0,15 et 0,25, dont le taux de formaldéhyde libre est inférieur ou egal à 1 %, dont le taux de phénol libre est inférieur ou egal à 4 %, et qui présente une viscosité déterminée à 20°C au tube viscosimétrique du type Oswald comprise entre 0,2 et 5 Pa.s et un pH de 6,7-7,0, obtenue par condensation à chaud à une température inférieure ou égale à 100°C du formaldéhyde etdu phénol, en milieu basique alcalin, en présence d'un catalyseur tasique de type hydroxyde de métal alcalin, le rapport molaire hydroxyde de métal alcalin sur phénol étant compris entre 0,01 et 0,1, caracterisée par le fait que lorsque cette condensation est parvenue à un certain stade déterminé par un temps d'écoulement de 40-45 secondes de 80 g de résine dans un tube viscosimétrique du type Oswald de coefficient K' = 0,006 environ, on introduit l'urée et on poursult la condensation à chaud jusqu'à obtention d'un taux de formaldéhyde libre inférieur ou égal à 1 %, ensuite après refroidissement, le milieu réactionnel est neutralisé à pH = 6,7-7,0 avec un acide minéral fort puis, si necessaire, il est concentré sous vide à une température non supérieure à 80°C de manière à obtenir la concentration désirée déterminée par un taux de matières sèches compris entre 70 et 90 % en poids.

2. Résine selon la revendication 1, caractérisée par le fait que le rapport molaire formaldéhyde sur phénol est de 2,16.

3. Résine selon la revendication 1, caractérisée par le fait que le rapport molaire urée sur phénol est de 0,19.

4. Procédé selon la revendication 1, caractérisé par le fait que le catalyseur alcalin utilisé est de l'hydroxyde de sodium dans un rapport molaire hydroxyde de sodium sur phénol de 0,055.

5. Application de la résine selon l'une quelconque des revendications 1, 2 ou 3 à la préparation de preimprégnés par catalyse acide.

6. Application de la résine selon l'une quelconque des revendications 1,2 ou 3 à la préparation de stratifiés renforcés-verre.

7

**Patentansprüche**

1. Reaktives Phenol-Formaldehydharz vom Resoltyp, welches gebundenen Harnstoff enthält und in welchem das Molverhältnis von Formaldehyd zu Phenol zwischen 2 und 2,5 liegt, das Verhältnis von Harnstoff zu Phenol zwischen 0,15 und 0,25 liegt, die Menge an freiem Formaldehyd unterhalb von oder gleich 1 % ist, die Menge an freiem Phenol unterhalb von oder gleich 4 % ist, und welches eine viskosität, bestimmt bei 20° C in einem Viskosimeterrohr vom Oswald-Typ, zwischen 0,2 und 5 Pa.s aufweist und einen pH von 6,7 bis 7,0 besitzt, erhalten durch Kondensation von Formaldehyd und Phenol in basischem, alkalischem Milieu in der Wärme bei einer Temperatur unterhalb von oder gleich 100°C in Anwesenheit eines basischen Katalysators vom Alkalimetallhydroxidtyp, wobei das Molverhältnis von Alkalimetallhydroxid zu Phenol zwischen 0,01 und 0,1 liegt, dadurch gekennzeichnet, daß man, sobald die Kondensation ein bestimmtes Stadium erreicht hat, das durch eine Aus-flußzeit von 40-45 sec von 80 g des Harzes in einem Viskosimeterrohr vom Oswald-Typ mit einem ungefähren Koeffizienten K' = 0,006 bestimmt ist, Harnstoff einführt und die Kondensation in der Wärme bis zur Erreichung eines Wertes von freiem Formaldehyd unterhalb von oder gleich 1 % fortführt, anschließend nach dem Abkühlen das Reaktionsmedium auf pH = 6,7-7,0 mit einer starken Mineralsäure neutralisiert und dann, falls erforderlich, im Vakuum bei einer Temperatur nicht über 80°C derart konzentriert, daß die gewünschte Konzentration, bestimmt durch einen Trockenfeststoffgehalt zwischen 70 und 90 Gew.-%,erreicht wird.

2. Harz nach Anspruch 1, dadurch gekennzeichnet, daß das Molverhältnis von Formaldehyd zu Phenol 2,16 ist.

3. Harz nach Anspruch 1, dadurch gekennzeichnet, daß das Molverhältnis von Harnstoff zu Phenol 0,19 ist.

4. Verfahren nach Anspruch 1, dadurch gekennzeichnet, daß der verwendete, alkalische Katalysator Natriumhydroxid in einem Molverhältnis Natriumhydroxid zu Phenol von 0,055

5. Anwendung des Harzes nach einem der Ansprüche 1, 2 oder 3 zur Herstellung von Harzimprägnaten durch saure Katalyse.

6. Anwendung des Harzes nach einem der Ansprüche 1, 2 oder 3 zur Herstellung von glasfaserverstärkten Schichtstoffen.

**Claims**

1. 4. reactive phenol-formaldehyde resin of the resol type which contains combined urea in its structure,having a molar ratio of formaldehyde to phenol comprised between 2 and 2.55, a ratio of urea to phenol comprised between 0.15 and 0.25, a rate of free formaldehyde lower than or equal to 1%, a proportion of free phenol lower than or equal to 4%, and a viscosity as determined at 20°C by a viscosimetric tube of the Oswald type comprised between 0.2 and 5 Pa.s, and a pH of 6.7-7.0 obtained by hot condensation at a temperature lower than or equal to 100°C, of formaldehyde and phenol, in basic alkaline medium, in the presence of a basic catalyst of the alkaline metal hydroxide type, the molar ratio of alkaline metal hydroxide to phenol being comprised between 0.01 and 0.1, characterized in that when such condensation has reached a certain level determined by a flow time of 40-45 seconds of 80 g of resin in a viscosimetric tube of the Oswald type, of coefficient K' = about 0.006, urea is introduced, and hot condensation is continued up to obtaining a free formaldehyde proportion lower than or equal to 1%, then after cooling down, the reaction medium is neutralized at pH = 6.7-7.0, with a strong mineral acid, and then, if necessary it is concentrated under vacuum at a temperature not higher than 80°C so as to obtain the desired concentration as determined bya dry material amount comprised between 70 and 90% by weight.

2. A resin according to claim 1, characterized in that the molar ratio of formaldehyde to phenol is 2.16.

3. A resin according to claim 1, characterized in that the molar ratio of urea to phenol is 0.19.

4. A process according to claim 1, characterized in that the alkaline catalyst used is sodium hydroxide in a molar ratio of sodium hydroxide to phenol of 0.055.

5. An application of the resin according to any one of claims 1, 2 or 3, to the preparation of preimpregnated articles through acid catalysis.

6. An application of the resin according to any one of claims 1, 2 or 3, to the preparation of glass reinforced laminates.